(19) Europäisches Patentamt
European Patent Office
Office européen des brevets

(11) **EP 2 188 029 B1**

(12) **EUROPÄISCHE PATENTSCHRIFT**

(45) Veröffentlichungstag und Bekanntmachung des Hinweises auf die Patenterteilung:
**16.10.2013 Patentblatt 2013/42**

(21) Anmeldenummer: **08785733.0**

(22) Anmeldetag: **28.08.2008**

(51) Int Cl.:
**B01D 33/01** *(2006.01)*          **B30B 9/04** *(2006.01)*

(86) Internationale Anmeldenummer:
**PCT/EP2008/007035**

(87) Internationale Veröffentlichungsnummer:
**WO 2009/030421 (12.03.2009 Gazette 2009/11)**

(54) **VERFAHREN ZUR STEUERUNG EINER TRENNUNG EINES GEMISCHES**

METHOD FOR CONTROLLING A SEPARATION OF A MIXTURE

PROCÉDÉ POUR COMMANDER LA SÉPARATION D'UN MÉLANGE

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **30.08.2007 DE 102007040924**

(43) Veröffentlichungstag der Anmeldung:
**26.05.2010 Patentblatt 2010/21**

(73) Patentinhaber: **LANXESS Deutschland GmbH 50569 Köln (DE)**

(72) Erfinder:
• DUMMERSDORF, Hans-Ulrich
  51399 Burscheid (DE)
• JANZEN, Siegfried
  42799 Leichlingen (DE)
• WEBER, Hans-Martin
  51373 Leverkusen (DE)
• PRZYKLENK, Alexander
  51069 Köln (DE)

(56) Entgegenhaltungen:
WO-A-2005/108049     US-A1- 2007 023 949

**Beschreibung**

Die Erfindung betrifft ein Verfahren zur Steuerung einer Trennung eines Gemisches aus mindestens zwei Substanzen, wobei mindestens eine Substanz als Feststoff und mindestens eine Substanz als Flüssigkeit vorliegt und wobei sich während des Trennprozesses die Viskosität des Gemisches durch die Abtrennung mindestens einer Substanz ändert.

Das Verfahren eignet sich insbesondere für Feststoff-Flüssigkeit-Trennungen. Ein übliches Verfahren hierbei ist die Filtration. Hierbei ist es einerseits möglich, dass einem Apparat, in dem die Filtration durchgeführt wird, bereits ein Gemisch aus Feststoff und Flüssigkeit zugeführt wird. Weiterhin ist es jedoch auch möglich, dass der Feststoff erst in dem Apparat, zum Beispiel durch eine Kristallisation, hergestellt wird.

So ist es zum Beispiel aus EP-B 0 920 894 bekannt, einer Waschkolonne eine Suspension zuzuführen. Die Waschkolonne umfasst einen Zylinder mit einem Kolben, der darin beweglich ist und mit einem Dichtungsteil gegen eine Innenwand des Zylinders gelagert ist. Der Kolben ist mit einem Filter verbunden, der eine Kammer abgrenzt, die oberhalb des Filters im Zylinder angeordnet ist. Im Betrieb wird der Kolben mit dem Filter in die Kammer hineingeführt, so dass deren Volumen verringert wird. Hierdurch konzentriert sich der Feststoff in dieser Kammer auf, da die Flüssigkeit durch den Filter ausströmen kann. Nachdem der Kolben einen vorgegebenen Weg zurückgelegt hat, beginnt ein Schaber, der in der Kammer angeordnet ist, entstandene Kristalle in axialer Richtung von der Kolbenoberfläche abzukratzen. Nachteil dieses Verfahrens ist es, dass sich die Feststoffmenge in Abhängigkeit von der ursprünglichen Konzentration und anderen Betriebsparametern in der Kammer ändern kann. Dies kann im ungünstigsten Fall dazu führen, dass die Feststoffkonzentration zu Beginn des Abkratzvorganges bereits so hoch ist, dass der Schaber beschädigt werden kann oder eine Bewegung des Schabers nicht mehr möglich ist. Dies liegt daran, dass der Schaber zeitgesteuert und damit unabhängig von den Eigenschaften des zu trennenden Gemisches gesteuert wird. Hierdurch ist die Bewegung des Schabers von der tatsächlichen Feststoffkonzentration in der Kammer unabhängig.

Die US 2007/0023949 A1 betrifft ein Verfahren zur Fest- Flüssig- Trennung, bei der eine Suspension in eine feste und eine flüssige Komponente getrennt wird, wobei insbesondere faserartige fest- flüssig trennende Filter in eine Pressform eingesetzt werden, die Suspension in der Pressform und auf dem Filter komprimiert wird und die feste Komponente zusammen mit den fest- flüssig trennenden Filtern ausgetragen wird. Beim Pressvorgang erfolgt ein Anstieg des Drehmoments, das ein Motor auf die Presse überträgt. Nach diesem Verfahren kann somit lediglich ein kompletter Filterkuchen samt Filter in einem Stück aus einer Filtervorrichtung ausgetragen werden.

Aufgabe der vorliegenden Erfindung ist es, ein Verfahren bereitzustellen, welches eine Steuerung des Trennprozesses erlaubt und bei dem die aus dem Stand der Technik bekannten Nachteile nicht auftreten.

Gelöst wird die Aufgabe durch ein Verfahren zur Steuerung einer Trennung eines Gemisches aus mindestens zwei Substanzen, wobei mindestens eine Substanz als Feststoff und mindestens eine Substanz als Flüssigkeit vorliegt und wobei sich während des Trennprozesses die Viskosität des Gemisches durch die Abtrennung mindestens einer Substanz ändert, folgende Schritte umfassend:

(a) Bewegen eines Kolbens (3) in einem Apparat (1) in dem Gemisch unter Beaufschlagung mit einer konstanten Kraft,
(b) Erfassen der Geschwindigkeit und/oder der Beschleunigung des Kolbens (3),
(c) Vergleich der Geschwindigkeit und/oder der Beschleunigung mit vorgegebenen Sollwerten und
(d) Abkratzen des Feststoffs, der ausgefallen ist und sich abgesetzt hat, bei Erreichen der Sollwerte für die Geschwindigkeit und/oder die Beschleunigung, mit einer im Apparat (1) enthaltenen Schabevorrichtung (21).

Durch das Bewegen des Kolbens in dem Gemisch unter Beaufschlagung mit einer konstanten Kraft sind die Werte für die Geschwindigkeit bzw. die Beschleunigung, die ermittelt werden, abhängig vom Widerstand, der dem Kolben durch das Gemisch entgegengebracht wird. Dieser Widerstand ist abhängig von der Viskosität. Bei Gemischen, die Feststoff und Flüssigkeit enthalten, ist dieser Widerstand insbesondere von der Konzentration an Feststoff in der Flüssigkeit abhängig. Bei Einsatz des gleichen Gemisches ist somit der Widerstand jeweils beim Erreichen einer im Wesentlichen gleich großen Konzentration der gleiche, so dass bei Erreichen dieser Konzentration der Wert für die Geschwindigkeit und die Beschleunigung beim Aufbringen einer vorgegebenen Kraft gleich ist. Auf diese Weise kann gewährleistet werden, dass weitere Schritte des Prozesses bei immer der im Wesentlichen gleichen Zusammensetzung des Gemisches durchgeführt werden. Im Wesentlichen gleiche Zusammensetzung bedeutet dabei, dass der Anteil der einzelnen Komponenten im Gemisch um maximal ± 5 Vol.-% variiert.

In einer bevorzugten Ausführungsform wird die Geschwindigkeit durch Bilden der ersten Ableitung des Weges des Kolbens, die mit einer konstanten Kraft beaufschlagt wird, nach der Zeit und die Beschleunigung durch Bilden der zweiten Ableitung des Weges des Kolbens nach der Zeit bestimmt. Der Weg des Kolbens, der mit konstanter Kraft beaufschlagt wird, lässt sich zum Beispiel durch dem Fachmann bekannte Positionierungsmessmethoden bestimmen. Geeignete Positionierungsmessmethoden sind zum Beispiel die Erfassung der Weglänge des Kolbens zwischen 0 und 100 % mit einem Wegaufnehmer oder einer beliebigen an sich bekannten optischen Vorrichtung wie beispielsweise Fotozellen.

Aus der zu zwei unterschiedlichen Zeiten gebildeten Position des Kolbens, der mit einer konstanten Kraft im Gemisch bewegt wird, lässt sich numerisch die Geschwindigkeit und/oder die Beschleunigung bestimmen. Üblicherweise werden hierzu zum Beispiel Differenzenverfahren eingesetzt.

Ganz allgemein gilt für die Geschwindigkeit:

$$v = \frac{ds}{dt}.$$

wobei v für die Geschwindigkeit, ds für die Änderung des Weges und dt für die Änderung der Zeit steht. Die Geschwindigkeit lässt sich durch Messung der Position zu zwei unterschiedlichen Zeitpunkten bestimmen. Vorzugsweise liegen die zwei Zeitpunkte, zu denen die Position bestimmt wird möglichst nah beieinander. Insbesondere ist es bevorzugt, wenn die beiden Positionsmessungen in einem Abstand von maximal 0,1 bis 0,5 s erfolgen.

Die Geschwindigkeit lässt sich dann durch ein Differenzenverfahren bestimmen. Hierzu wird einerseits die Differenz zwischen den Positionen zu den beiden Zeitpunkten bestimmt. Aus dieser Differenz ergibt sich die Änderung des Weges des Kolbens, der im Gemisch bewegt wird. dt entspricht dem Zeitabstand zwischen den beiden Messungen. Für die Geschwindigkeit ergibt sich somit:

$$v = \frac{x_2 - x_1}{\Delta t}.$$

wobei $x_1$ die Position des Kolbens zu einem ersten Zeitpunkt ist, $x_2$ die Position des Kolbens zu einem zweiten Zeitpunkt und $\Delta t$ die Zeit, die zwischen den beiden Messungen der ersten Position und der zweiten Position verstrichen ist.

Die Beschleunigung ist ganz allgemein die zweite Ableitung des Weges nach der Zeit. Für diese gilt ganz allgemein:

$$a = \frac{d^2 s}{dt^2}.$$

Darin bedeutet a die Beschleunigung. Die zweite Ableitung kann ebenso wie vorstehend für die erste Ableitung beschrieben numerisch bestimmt werden.

Dies erfolgt zum Beispiel in Form eines Differenzenverfahrens. Hierbei ist es notwendig, die Position des Kolbens zu drei verschiedenen Zeitpunkten zu bestimmen. Die drei verschiedenen Zeitpunkte liegen vorzugsweise möglichst dicht beieinander. Bevorzugt liegt der Abstand zwischen zwei Messungen im Bereich von 0,1 bis 0,5 s.

Nach einem Differenzenverfahren ergibt sich die Beschleunigung zum Beispiel zu

$$a = \frac{x_3 - 2x_2 + x_1}{(\Delta t)^2}.$$

Hierin ist $x_3$ die Position des Kolbens zu einem dritten Zeitpunkt, $x_2$ die Position des Kolbens zu einem zweiten Zeitpunkt und $x_1$ die Position zu einem ersten Zeitpunkt. $\Delta t$ ist die zeitliche Differenz zwischen zwei Messungen. Hierbei ist es erforderlich, dass der Abstand, zu dem die Position des Kolbens gemessen wird jeweils gleich groß ist.

Neben der oben beschriebenen Bestimmung der Ableitungen durch Differenzenverfahren kann die Bestimmung der ersten und zweiten Ableitung zur Bestimmung von Geschwindigkeit und Beschleunigung des Kolbens auch durch jedes andere, dem Fachmann bekannte Verfahren erfolgen.

Durch die Bestimmung von Geschwindigkeit und Beschleunigung kann das Verfahren zur Steuerung der Trennung rein auf empirischen Eigenschaften des Stoffsystems basierend gesteuert werden, wobei sich die empirischen Eigenschaften aus dem Verfahren bzw. der Art des Apparates unabhängig vom jeweiligen Stoffsystem ergeben. Eine Überforderung zum Beispiel der Antriebe kann vermieden werden.

Im Allgemeinen wird dem Kolben eine translatorische Bewegung aufgeprägt. Entsprechend wird bei einem Kolben, der in dem Gemisch bewegt wird, die translatorische Geschwindigkeit und Beschleunigung ermittelt.

Ein eingesetzter Kolben kann dabei jede beliebige, dem Fachmann bekannte Form für einen Kolben haben. Dieser kann zum Beispiel eine Kolbenfläche aufweisen, deren Querschnitt der Querschnittsfläche des Apparates entspricht. In diesem Fall dichtet üblicherweise die Kolbenfläche eine Kammer oberhalb des Kolbens ab. Durch eine Bewegung des Kolbens wird die Kammer verkleinert oder vergrößert. Weiterhin ist es jedoch auch möglich, den Kolben so auszubilden, dass dieser im Gemisch bewegbar ist, ohne eine Kammer abzutrennen.

In einer besonders bevorzugten Ausführungsform ist der Kolben, der unter Beaufschlagung einer konstanten Kraft in dem Gemisch bewegt wird, mit einer Filterfläche versehen. Die Filterfläche wird innerhalb eines Behälters geführt. Durch die Filterfläche kann die als Flüssigkeit vorliegende Substanz des Gemisches strömen. Während des Trennvorganges wird der Kolben in eine Kammer hineinbewegt, die sich oberhalb der Filterfläche befindet. Hierdurch wird die Kammer verkleinert. Aufgrund der Kolbenbewegung erhöht sich der Druck in der Kammer, so dass die Flüssigkeit durch die Filterfläche hindurchströmt. Der Feststoffgehalt innerhalb der Kammer nimmt durch die ausströmende Flüssigkeit zu. Aufgrund des zunehmenden Feststoffgehaltes nimmt auch die Viskosität des Gemisches zu. Die Widerstandskraft, die von dem Kolben überwunden werden muss, steigt an. Bei gleicher aufzubringender Kraft nehmen aus diesem Grund die Geschwindigkeit und die Beschleunigung des Kolbens ab.

Um eine Beschädigung des Trennapparates zu vermeiden wird in einer ersten Ausführungsform bei Erreichen der Sollwerte für die Geschwindigkeit und/oder die Beschleunigung der Trennprozess beendet. Die einzelnen Substanzen, in die das Gemisch getrennt wurde können dann zum Beispiel aus dem Apparat entnommen werden.

Wenn die Trennung durch den Kolben, der mit der Filterfläche versehen ist und in dem Trennapparat nach oben bewegt wird, erfolgt, so wird zum Beenden des Trennprozesses die Kolbenbewegung beendet. In der Kammer, in die der Kolben eingefahren ist, befindet sich dann im Allgemeinen der Feststoff, der nach Beendigung der Kolbenbewegung aus dem Apparat entnommen werden kann,

wobei bei Erreichen der vorgegebenen Sollwerte weitere Verfahrensschritte gestartet werden. So ist es zum Beispiel möglich, dass der Apparat mit einem Schaber versehen ist, der bei Erreichen der Sollwerte den ausgefallenen Feststoff, der sich an Filter und Wänden abgesetzt hat, abkratzt. Hierdurch wird ein Verbacken und Verkleben des Apparates mit dem Feststoff vermieden und eine weitere Abtrennung von Flüssigkeit aus dem Feststoff durch eine weitere Kolbenbewegung ist möglich. Ein quasikontinuierlicher Betrieb ist so möglich. In diesem Fall ist es zum Beispiel möglich, einen zweiten Sollwert vorzusehen, zu dem dann der Trennprozess beendet wird. Alternativ ist es auch möglich, den Trennprozess in diesem Fall zu beenden, wenn der Kolben einen vorgegebenen Weg zurückgelegt hat oder sich in der Endlage, d.h. dem oberen Totpunkt, befindet.

Dabei ist das Verfahren für jede beliebige Fest-Flüssig-Trennung anwendbar.

In einer bevorzugten Ausführungsform wird der Feststoff in dem Gemisch durch eine Kristallisation erzeugt. Dabei ist es einerseits möglich, dass die Kristallisation in dem gleichen Apparat durchgeführt wird, in dem auch die Trennung des Gemisches erfolgt. Alternativ ist es jedoch auch möglich, dass die Kristallisation in einem ersten Apparat durchgeführt wird. Das Gemisch, das die bei der Kristallisation hergestellten Kristalle enthält, die in einer Flüssigkeit suspendiert sind, wird dem Apparat zur Trennung zugeführt.

In einer besonders bevorzugten Ausführungsform wird das erfindungsgemäße Verfahren eingesetzt, wenn das zu trennende Gemisch zum Beispiel bei einer kontinuierlichen Kristallisation hergestellt wird. In diesem Fall ist es erforderlich, dass auch die Fest-Flüssig-Trennung kontinuierlich oder zumindest quasikontinuierlich durchgeführt wird. Ein geeigneter Apparat, in dem die Fest-Flüssig-Trennung durchgeführt werden kann, ist zum Beispiel in EP-A 0 920 894 offenbart. Bei diesem ist in einem zylindrischen Behälter ein Kolben geführt, der eine Kolbenfläche aufweist, die eine obere Kammer in dem Behälter begrenzt und abdichtet. Die Kolbenfläche ist als Filterfläche ausgeführt.

Um den Behälter mit dem zu trennenden Gemisch zu befüllen, wird der Kolben zunächst nach unten bewegt, wodurch sich die Kammer vergrößert. Hierdurch nimmt der Druck in der Kammer ab und das zu trennende Gemisch wird in die Kammer eingezogen. Die Bewegung des Kolbens wird bis zum Erreichen des unteren Kolbentotpunktes fortgeführt. Der Raum oberhalb des Kolbens ist anschließend vollständig mit dem zu trennenden Gemisch befüllt. Sobald der Raum befüllt ist und der Kolben den unteren Totpunkt erreicht hat, beginnt die Aufwärtsbewegung des Kolbens. Hierdurch wird das Gemisch in der Kammer komprimiert. Die im Gemisch enthaltene Flüssigkeit wird durch die Filterfläche hindurchgepresst. Hierdurch wird der im Gemisch enthaltene Feststoff aufkonzentriert. Es entsteht ein Filterkuchen, der gegen einen im oberen Teil des Behälters und dem Kolben gegenüberliegenden Schaber gepresst wird. Der Schaber umfasst zum Beispiel einen Teller, der mit mehreren Spaltmessern versehen ist. Durch eine Drehbewegung des Tellers wird der verdichtete Filterkuchen aus dem komprimiertem Bett abgeschabt und in einen über dem Schaber liegenden Kopfraum des Apparates befördert. Hier kann der abgeschabte Feststoff zum Beispiel durch getaktete Spülvorgänge entfernt werden.

Da die Bewegung des Kolbens üblicherweise diskontinuierlich abläuft, die Fest-Flüssig-Trennung des Feststoffes aus dem Gemisch in Verbindung mit einem kontinuierlichen Kristallisationsapparat jedoch kontinuierlich oder zumindest quasikontinuierlich ablaufen muss, um einen stationären Betrieb der Gesamtanlage zu gewährleisten, ist es notwendig, den Schaber ebenfalls zu takten.

Bei dem aus EP-A 0 920 894 bekannten Apparat erfolgt die Steuerung des Schabers anhand einer fest vorgegebenen Zeit. Nach Ablauf dieser fest vorgegebenen Zeit wird der Schaber gestartet, um den Feststoff abzuschaben. Bei Schwankungen der Feststoffkonzentration führt dies jedoch dazu, dass möglicherweise die Feststoffkonzentration zu Beginn des Schabevorganges bereits zu hoch ist und hierdurch der Antrieb des Schabers bestätigt werden kann. Es kann zu Störungen und Ausfällen des Schaberbetriebes kommen und der Apparat kann damit nicht weiter betrieben werden. Zudem können sich diese Störungen in die Kristallisationsstufe fortpflanzen und dort zu Verstopfungen oder permanenten Veränderungen des Kristallgehaltes führen. Dies kann zu einem kompletten Ausfall der gesamten Kristallisationsanlage führen.

Wenn andererseits der Schaber bereits eingeschaltet wird, wenn der Konzentration an Feststoff noch nicht ausreichend hoch ist, können insbesondere dann, wenn vorgegebene Reinheiten des Feststoffs erzielt werden sollen, Störungen der Qualitätseigenschaften im Feststoff auftreten, da im Feststoff noch Flüssigkeit in unzulässiger Menge enthalten ist. Erfindungsgemäß wird daher der Schaber betätigt, sobald die Geschwindigkeit und/oder die Beschleunigung des Kolbens einen vorgegebenen Sollwert erreicht hat. Bei einer vorgegebenen Kraft auf den Kolben sind die Geschwindigkeit und/oder die Beschleunigung, die der Kolben ausführt, von der Zusammensetzung des Gemisches abhängig. Hierdurch wird gewährleistet, dass der Schaber prozessnah und prozessadäquat jeweils bei im Wesentlichen gleicher Gemischzusammensetzung gestartet wird, unabhängig davon, wie die Zusammensetzung des Ausgangsgemisches aussieht. Eine gleichmäßige Produktqualität des Feststoffes kann erzielt werden. Dies ist darauf zurückzuführen, dass mit zunehmender Feststoffkonzentration im Gemisch eine größere Kraft aufgebracht werden muss, um den Kolben mit gleich bleibender Geschwindigkeit zu bewegen. Andersherum nimmt bei gleich bleibender Kraft die Geschwindigkeit des Kolbens mit zunehmender Feststoffkonzentration im Gemisch ab. Dies führt dazu, dass der Kolben bei einer konstanten aufgebrachten Kraft bei der gleichen Gemischzusammensetzung die im Wesentlichen gleiche Geschwindigkeit hat.

In einer besonders bevorzugten Ausführungsform werden sowohl die Geschwindigkeit als auch die Beschleunigung bestimmt.

Wenn das erfindungsgemäße Verfahren bei einer Vorrichtung zur Fest-Flüssig-Trennung eingesetzt wird, bei der in einem Behälter ein Kolben bewegt wird, der eine Kammer gegen die Kolbenwand abdichtet und wobei der Kolben mit einer Filterplatte versehen ist, durch welche Flüssigkeit strömen kann, wird während einer ersten Phase, in der sich der Kolben des Apparates, der mit einer konstanten Kraft angetrieben wird, nach unten bewegt und so die Kammer oberhalb des Kolbens vergrößert, das Gemisch aus Feststoff und Flüssigkeit in den Apparat angesaugt. Hierzu ist ein Einlassventil, über welches das Gemisch einströmen kann, geöffnet. Sobald der Kolben seinen unteren Totpunkt erreicht hat, das heißt das Volumen in der Kammer oberhalb des Kolbens seine maximale Ausdehnung erfahren hat und somit der Apparat mit der maximalen Menge an Gemisch gefüllt ist, wird das Einlassventil verschlossen. In einer nächsten Phase beginnt der Kolben seine Aufwärtsbewegung. Hierdurch wird die Kammer oberhalb des Kolbens verkleinert. Während der Aufwärtsbewegung werden die Zeit und die Lagekoordinate über einen Wegaufnehmer gemessen und in ein übliches und dem Fachmann bekanntes Prozessleitsystem eingespeist und dort verarbeitet.

Im Prozessleitsystem wird erfindungsgemäß über einen numerischen Algorithmus die erste und/oder die zweite Ableitung des Kolbenweges nach der Zeit gebildet. Der Kolbenweg ergibt sich dabei aus der Lagekoordinate, die über den Wegaufnehmer gemessen worden ist.

Während der Aufwärtsbewegung des Kolbens wird aus der sich ständig verkleinernden Kammer Flüssigkeit verdrängt, wodurch sich die Feststoffkonzentration erhöht. Die Flüssigkeit strömt über den mit der Filterfläche versehenen Kolben aus.

Aufgrund der zunehmenden Feststoffkonzentration im Gemisch muss die Flüssigkeit aus immer enger werdenden Zwischenräumen zwischen einzelnen Feststoffpartikeln verdrängt werden. Dies erfordert eine zunehmende Kraft. Bei gleich bleibender Antriebskraft des Kolbens führt dies dazu, dass der Kolben langsamer wird. Die erste Ableitung des Kolbenweges nach der Zeit, die die Geschwindigkeit wiedergibt, wird kleiner. Die zweite Ableitung des Kolbenweges nach der Zeit, die die Beschleunigung wiedergibt, nimmt ab dem unteren Totpunkt der Kolbenbewegung negative Werte an. Der Betrag dieser negativen Werte vergrößert sich laufend dadurch, dass der Kolben abgebremst wird.

Sobald die erste Ableitung und/oder die zweite Ableitung des Kolbenweges nach der Zeit vorgegebene, systemabhängige Schwellenwerte erreichen, wird zum Beispiel ein oberhalb des Feststoffbettes befindlicher Schaber eingeschaltet. Der Schaber schabt das verdichtete Feststoffbett ab und fördert dieses aus der Kammer, die als Kompressionsraum dient. Die Schwellenwerte sind durch wenige Versuche bestimmbar. Über die Größe der Schwellenwerte lässt sich die Feststoffkonzentration festlegen, bei welcher der Schaber eingeschaltet werden soll. Dadurch, dass Feststoff aus der Kammer gefördert wird, komprimiert der mit konstanter Kraft angetriebene Kolben das Feststoffbett nicht weiter. Die gewünschte Dichte des Feststoffes wird eingehalten und gleichzeitig konstant gehalten. So kann zum Beispiel eine vorgegebene Reinheit des Feststoffes eingehalten werden. Die Reinheit des Feststoffes ergibt sich zum Beispiel auch aus dem Anteil an Flüssigkeit im Feststoff.

Der Kolben kann zum Beispiel durch einen Linearantrieb oder einen Luftdruckzylinder oder einen Hydraulikzylinder mit Kolben angetrieben werden.

Dadurch dass mit dem Einschalten des Schabers und der Entfernung von Feststoff aus der Kammer keine weitere Aufkonzentrierung an Feststoff erfolgt, kann der Schaber unbeeinträchtigt und mit konstanter Geschwindigkeit das Feststoffbett abschaben, ohne dass es zu Störungen im Betrieb kommt.

Durch das erfindungsgemäße Verfahren lässt sich der Apparat und damit das gesamte kontinuierliche Kristallisationsverfahren kontinuierlich und bei hoher Qualität des Feststoffes ohne technische Störungen und automatisch betreiben. Die relevanten Signale, die die Betriebsphasen des Apparates bestimmen, werden erfindungsgemäß direkt aus dem Prozess und stoffsystemspezifisch gewonnen.

Die genauen Werte für die Trennung der einzelnen Phasen hängen von unterschiedlichen Verfahrensparametern ab. Diese können durch wenige einfache Betriebsversuche durch den Fachmann mit dem erfindungsgemäßen Verfahren und einer entsprechenden Vorrichtung bestimmt und für den weiteren Betrieb fest definiert werden, um reproduzierbare Ergebnisse zu erzielen. Die Parameter, von denen die Schwellwerte abhängen, sind zum Beispiel die Art des Stoffsystems, die Größe der Feststoffkristalle und die gewünschte Reinheit der Zielprodukte.

Auf diese Weise ist für jedes Stoffsystem und seine entsprechende Start- und Zielzusammensetzung ein fixer durch wenige Versuche bestimmbarer Parametersatz, der den Verfahrensablauf und einzelnen Trennphasen genau definiert, bestimmbar.

Durch das erfindungsgemäße Verfahren ist es möglich, den Apparat zur Fest-Flüssig-Trennung störungsfrei am Leistungslimit zu betreiben und hierdurch die Raum-Zeit-Ausbeute zu steigern. Zudem kann die Qualität des abgetrennten Feststoffes an gewünschte Reinheitsforderungen angepasst werden.

Das erfindungsgemäße Verfahren eignet sich insbesondere zur Fest- Flüssig- Trennung von p- Dichlorbenzenkristallen aus einer p- Dichlorbenzen/m- Dichlorbenzen- Mutterlaugelösung, die aus einer kontinuierlichen Kristallisationsstufe zur Trennung beider Isomere stammen.

Neben der Trennung von p-Dichlorbenzen/m-Dichlorbenzen ist das erfindungsgemäße Verfahren aber auch für jede andere Feststoff-Flüssig-Trennung einsetzbar.

Neben vorstehend beschriebenem Apparat eignet sich das Verfahren auch weiterhin für jeden anderen Apparat, in dem eine Feststoff-Flüssig-Trennung durchgeführt werden kann. Neben der Fest-Flüssig-Trennung ist es auch möglich, das erfindungsgemäße Verfahren bei mehrphasigen Flüssig-Flüssig-Trennungen einzusetzen, wenn die zu trennenden Flüssigkeiten unterschiedliche Viskositäten aufweisen. Durch die unterschiedlichen Viskositäten ändert sich bei der Trennung die Viskosität des Gemisches. Bei einer konstant aufgebrachten Kraft ändert sich somit auch die Geschwindigkeit und/oder die Beschleunigung eines bewegten Elementes im Gemisch. Somit lässt sich auch in diesem Fall beim Erzielen von vorgegebenen Sollwerten die Trennung abbrechen, oder es können andere Maßnahmen ergriffen werden, die erforderlich sind, um das gewünschte Ergebnis zu erzielen.

Eine Ausführungsform der Erfindung ist in den Zeichnungen dargestellt und in der nachfolgenden Beschreibung näher erläutert.

Es zeigen:

Figur 1    eine schematische Darstellung eines für das erfindungsgemäße Verfahren geeigneten Apparates,

Figur 2    exemplarisch den Verlauf der ersten und zweiten Ableitung in Abhängigkeit von der Zeit.

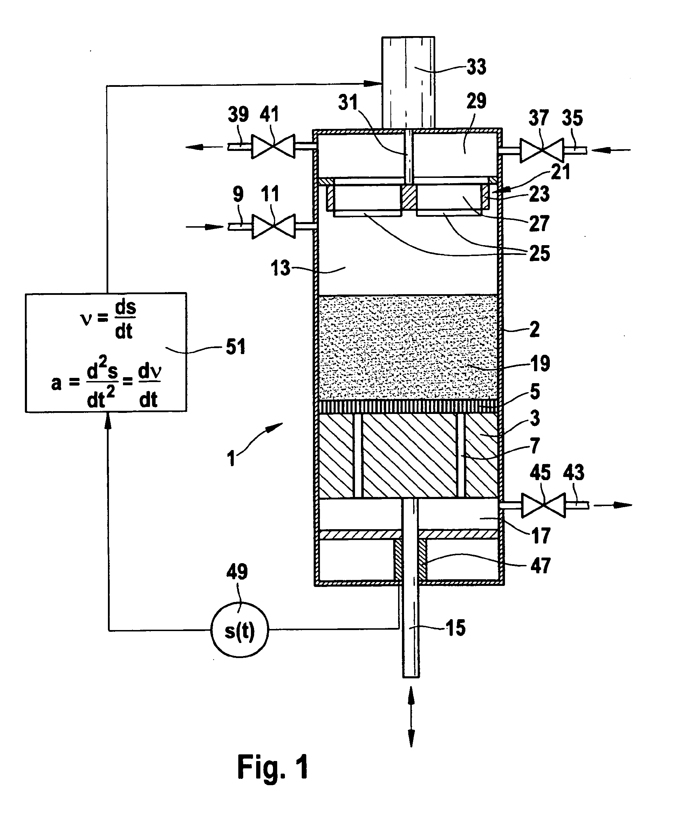

In Figur 1 ist schematisch ein für das erfindungsgemäße Verfahren geeigneter Apparat dargestellt.

Ein Apparat 1, der sich zur Durchführung des erfindungsgemäßen Verfahrens eignet, umfasst einen Behälter 2, in dem ein Kolben 3 axial zur Gehäuseachse bewegbar aufgenommen ist. Der Kolben 3 ist mit einer als Filterfläche dienenden Siebplatte 5 abgedeckt. Bei einer Trennung eines Zweiphasengemisches mit einer festen und einer flüssigen Phase wird die Maschenweite der Siebplatte 5 vorzugsweise so gewählt, dass der Feststoff zurückgehalten wird und nur die Flüssigkeit die Siebplatte 5 passieren kann. Damit die Flüssigkeit ablaufen kann, ist im Kolben 3 mindestens ein Kanal 7 ausgebildet. Vorzugsweise enthält der Kolben 3 jedoch mehr als einen Kanal 7.

Über eine Zufuhrleitung 9 wird das zu trennende Gemisch dem Apparat zugeführt. Die Zufuhrleitung 9 lässt sich mit einem Einlassventil 11 verschließen.

Über die Zufuhrleitung 9 wird dem Behälter 2 ein zu trennendes Gemisch zugeführt. Das Gemisch strömt in eine Kammer 13 oberhalb des Kolbens 3. Sobald die Kammer 13 mit dem zu trennenden Gemisch befüllt ist, wird das Einlassventil 11 verschlossen. Hierdurch wird vermieden, dass bei einer Bewegung des Kolbens 3 in die Kammer 13 und der damit verbundenen Kompression des Gemisches ein Teil des Gemisches über die Zufuhrleitung 9 wieder ausströmt. Um den Trennvorgang zu starten wird der Kolben 3 in die Kammer 13 hineinbewegt. Dies erfolgt zum Beispiel, wie hier dargestellt, über eine Kolbenstange 15, die mit dem Kolben 3 verbunden ist und durch einen hier nicht dargestellten, dem Fachmann bekannten pneumatischen oder elektrischen Linearantrieb angetrieben wird. Auch jeder andere, dem Fachmann bekannte Antrieb, mit dem sich der Kolben 3 bewegen lässt, ist geeignet.

Durch das Komprimieren strömt Flüssigkeit durch die Siebplatte 5, während der Feststoff in der Kammer 13 zurückgehalten wird. Die Flüssigkeit strömt durch die Siebplatte 5 und die Kanäle 7 in einen Sammelraum 17. Gleichzeitig setzt sich auf der Siebplatte 5 eine Feststoffschicht 19 aus dem im Gemisch enthaltenen Feststoff ab. Die Feststoffschicht 19 liegt zum Beispiel in Form einer Kristallschüttung vor, wenn das zu trennende Gemisch beispielsweise ein Mutterlauge-Kristall-Gemisch aus einem Kristallisationsapparat ist.

Um zu vermeiden, dass Feststoff durch die Siebplatte 5 hindurchströmt, ist es möglich, dass bei entsprechend kleinen Partikeln anstelle einer Siebplatte eine Filterplatte eingesetzt wird. Auch ist es möglich, dass auf der Siebplatte 5 eine Filterplatte aufliegt. Die Porengröße des Filters ist dabei so gewählt, dass die Poren kleiner sind als die kleinsten im Gemisch enthaltenen Feststoffpartikel. An dem dem Kolben 3 gegenüberliegenden Ende des Behälters 2 ist eine Schabevorrichtung 21 angeordnet. Die Schabevorrichtung 21 umfasst zum Beispiel, wie hier dargestellt, einen Schabergrundkörper 23, in dessen dem Kolben 3 zugewandten Stirnseite Schabermesser 25 eingelassen sind. Die Schabermesser 25 lassen jeweils einen durch den Schabergrundkörper 23 durchgängigen Spalt 27 frei. Der Spalt 27 stellt eine Verbindung von der Kammer 13 mit einem Feststoffsammelraum 29 her. Um mit der Schabevorrichtung 21 Feststoff zum Beispiel von der Innenwand des Behälters 2 abschaben zu können, ist diese über eine Welle 31 mit einem Antrieb 33 verbunden.

Zu Beginn eines Trennungszyklus befindet sich der Kolben 3 an seinem oberen Totpunkt. Die Kammer 13 hat somit ein minimales Volumen. Um die Kammer 13 nun zu befüllen, wird das Einlassventil 11 geöffnet. Der Kolben bewegt sich in Richtung seines unteren Totpunktes. Hierdurch vergrößert sich die Kammer 13 und das zu trennende Gemisch strömt über die Zufuhrleitung 9 durch das Einlassventil 11 in die Kammer 13 ein. Sobald der Kolben 3 seinen unteren Totpunkt erreicht hat, wird das Einlassventil 11 verschlossen. Die Kammer 13 hat nun ihre maximale Ausdehnung. Während des Befüllungsvorganges beginnen bereits erste Feststoffpartikel sich auf der Siebplatte 5 durch Sedimentationsvorgänge abzusetzen.

Nach Erreichen des unteren Totpunktes des Kolbens 3 erfolgt eine Bewegungsumkehr. Der Kolben 3 bewegt sich wieder in die Kammer 13 hinein. Hierdurch wird das in der Kammer 13 enthaltene Gemisch komprimiert. Aufgrund des höheren Druckes strömt Flüssigkeit durch die Feststoffschicht 19, die sich auf der Siebplatte 5 gesammelt hat und die Siebplatte 5 sowie die Kanäle 7 in den Sammelraum 17.

Sobald die Feststoffschicht 19, die sich auf der Siebplatte 5 des Kolbens 3 angesammelt hat, die Schabevorrichtung 21 erreicht, wird diese eingeschaltet und Feststoff wird von der Feststoffschicht 19 abgeschabt und durch die Spalte 27 in den Feststoffsammelraum 29 transportiert. Aus dem Feststoffsammelraum 29 kann der Feststoff ausgespült werden.

Wenn der Feststoff das gewünschte Produkt darstellt, welches in hoher Reinheit gewonnen werden soll, erfolgt das Ausspülen des Feststoffes aus dem Feststoffsammelraum 29 zum Beispiel mit dem geschmolzenen Feststoffmaterial. Hierdurch wird vermieden, dass eine weitere Substanz in den Feststoff eingebracht wird.

Um den Feststoff aus dem Feststoffsammelraum 29 ausspülen zu können, mündet in den Feststoffsammelraum eine Spülmittelzuleitung 35, die mit einem zweiten Einlassventil 37 verschließbar ist.

Über einen Spülmittelauslass 39 kann das Spülmittel mit dem darin enthaltenen Feststoff, der entweder im Spülmittel gelöst wird oder als Feststoff im Spülmittel dispergiert ist, aus dem Feststoffsammelraum 29 ausgetragen. Der Spülmittelauslass 39 ist mit einem Auslassventil 41 verschließbar.

Um den Feststoff aus dem Feststoffsammelraum 29 zu entfernen wird zunächst das zweite Einlassventil 37 geöffnet. Das Spülmittel kann in den Feststoffsammelraum 29 einströmen. Gleichzeitig wird das Auslassventil 41 am Spülmittelauslass 39 geöffnet. So kann das Spülmittel mit dem Feststoff über den Spülmittelauslass 39 aus dem Feststoffsammelraum 29 wieder ausströmen. Sobald der Feststoff aus dem Feststoffsammelraum 29 ausgespült worden ist, werden das zweite Einlassventil 37 und das Auslassventil 41 wieder verschlossen. Es kann sich wieder Feststoff im Feststoffsammelraum 29 sammeln. Sobald der Feststoffsammelraum 29 erneut einen vorgegebenen Füllstand erreicht hat, wird der Feststoff wieder aus dem Feststoffsammelraum 29 ausgespült. Alternativ kann das Ausspülen des Feststoffes aus dem Feststoffsammelraum 29 auch kontinuierlich erfolgen, solange die Schabevorrichtung 21 betrieben wird. In diesem Fall werden das zweite Einlassventil 37 und das Auslassventil 41 geöffnet, sobald die Schabevorrichtung 21 in Gang gesetzt wird. Ab diesem Zeitpunkt wird der Feststoffsammelraum 29 von dem Spülmittel durchströmt. Das Verschließen der Spülmittelzuleitung 35 mit dem zweiten Einlassventil 37 und des Spülmittelauslasses 39 mit dem Auslassventil 41 erfolgt erst dann, wenn die Betätigung der Schabevorrichtung 21 wieder beendet wird.

Die Flüssigkeit, die sich im Sammelraum 17 während der Aufwärtsbewegung des Kolbens 3 gesammelt hat, wird über einen Auslass 43 aus dem Sammelraum 17 entfernt. Der Auslass 43 ist mit einem zweiten Auslassventil 45 verschließbar. Sobald das zweite Auslassventil 45 geöffnet ist, kann die Flüssigkeit durch den Auslass 43 aus dem Sammelraum 17 abströmen. In einer bevorzugten Verfahrensvariante wird das zweite Auslassventil 45 geöffnet, wenn der Kolben 3 nach unten bewegt wird und die Kammer 13 neu befüllt wird. Durch die Bewegung des Kolbens 3 nach unten bewegt sich dieser in den Sammelraum 17 hinein. Das Volumen des Sammelraums 17 wird verkleinert und die Flüssigkeit darin wird komprimiert. Hierdurch wird bei geöffnetem zweiten Auslassventil 45 die Flüssigkeit, die im Sammelraum 17 enthalten ist durch den Auslass 43 herausgefördert. Sobald der Kolben 3 seinen unteren Totpunkt erreicht hat, wird das zweite Auslassventil 45 verschlossen.

Mit einem Wegaufnehmer 47 wird die Position des Kolbens 3, der sich innerhalb des Behälters 2 hin- und herbewegt zu jedem Zeitpunkt in Abhängigkeit von der Zeit ermittelt. Als Wegaufnehmer 47 eignet sich jeder beliebige, dem Fachmann bekannte mechanische oder elektrische Wegaufnehmer. Mit Hilfe des Wegaufnehmers 47 wird eine Zeitfunktion 49 zu jedem Betriebszeitpunkt des Apparates erzeugt. Die Zeitfunktion 49 gibt den Weg des Kolbens 3 in Abhängigkeit von der Zeit wieder. Die Zeitfunktion 49 ist eine Eingangsgröße für eine Steuereinrichtung 51. Die Steuereinrichtung 51 ist zum Beispiel ein Prozessrechner.

Aus der Zeitfunktion 49 werden erfindungsgemäß in der Steuereinrichtung 51 die Geschwindigkeit und die Beschleunigung des Kolbens 3 ermittelt. Die Geschwindigkeit ist dabei die erste Ableitung der Zeitfunktion 59 nach der Zeit und die Beschleunigung die zweite Ableitung nach der Zeit. Die Bildung der ersten bzw. zweiten Ableitung erfolgt dabei durch ein dem Fachmann bekanntes gängiges numerisches Verfahren. Sobald die Geschwindigkeit bzw. die Beschleunigung einen vorgegebenen Schwellenwert unterschreiten, wird der Antrieb 33 der Schabevorrichtung 21 eingeschaltet. Der Schwellenwert lässt sich zum Beispiel durch wenige Experimente für das jeweilige Stoffsystem ermitteln.

Da die über die erste bzw. zweite Ableitung erzeugte Funktion der Kolbengeschwindigkeit bzw. der Kolbenbeschleunigung unabhängig vom jeweiligen Stoffsystem ist, und sich gezeigt hat, dass bei gleicher Antriebskraft jeweils bei einer vergleichbaren Zusammensetzung des Gemisches die Beschleunigungswerte und Geschwindigkeitswerte des Kolbens 3 gleich sind, erfolgt das Einschalten der Schabevorrichtung 21 jeweils bei einer genau festgelegten Dichte des Feststoffbettes und bei einer vorgegebenen Kompression und damit auch bei einer vorgegebenen Reinheit des Feststoffes. Auf diese Weise lässt sich der Feststoff in einer reproduzierbaren Qualität aus dem Gemisch abtrennen.

Da sich jeweils die gleichen Geschwindigkeits- und Beschleunigungswerte für den Kolben bei gleicher Feststoffkonzentration im Gemisch einstellen, kann diese unabhängig von der ursprünglichen Feststoffkonzentration im Gemisch betrieben werden. Bei einer niedrigeren Feststoffkonzentration im Ausgangsgemisch wird die Schabevorrichtung 21 später eingeschaltet, während sie bei einer höheren Ausgangskonzentration an Feststoff im ursprünglichen Gemisch früher eingeschaltet wird, da die entsprechende Feststoffkonzentration ebenfalls früher erreicht wird. Anders als bei einer Steuerung der Schabevorrichtung 21 über die zurückgelegte Weglänge des Kolbens werden so Schädigungen an dem Kolben vermieden.

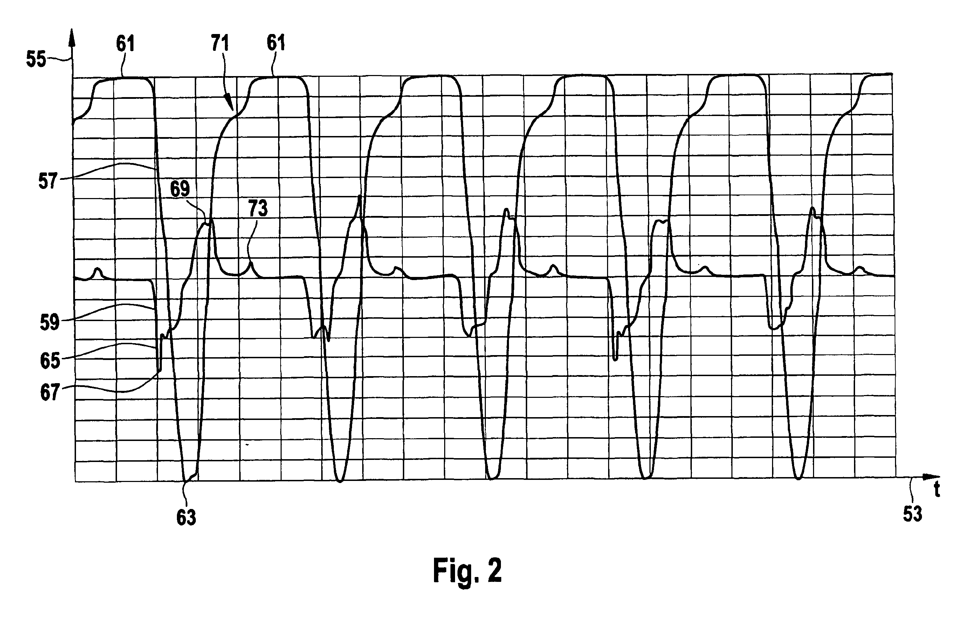

In Figur 2 ist exemplarisch der Verlauf der ersten und zweiten Ableitung in Abhängigkeit von der Zeit über mehrere Zyklen dargestellt.

In dem in Figur 2 dargestellten Diagramm ist auf der x-Achse 53 die Zeit t und auf y-Achse 55 die Funktion des Kolbenweges 57 und die Funktion der Geschwindigkeit 59 in Abhängigkeit von der Zeit t dargestellt.

Zum Füllen der Kammer 13 mit dem zu trennenden Gemisch bewegt sich der Kolben 3 von einem oberen Totpunkt 61 zu einem unteren Totpunkt 63. Solange der Kolben 3 im oberen Totpunkt 61 steht ist die Geschwindigkeit Null. Während sich der Kolben vom oberen Totpunkt 61 zum unteren Totpunkt 63 bewegt, zeigt die Geschwindigkeitsfunktion 59 einen Ausschlag 65 nach unten. Der Betrag der Geschwindigkeit nimmt hierbei zunächst bis zu einer maximalen Geschwindigkeit 67 zu und dann wieder ab, bis der untere Totpunkt 63 erreicht ist. Jetzt erfolgt eine Bewegungsumkehr und die Geschwindigkeit nimmt zu, bis sie ein oberes Maximum 69 erreicht hat. Aufgrund der Zunahme der Feststoffkonzentration nimmt die Geschwindigkeit des Kolbens 3 ab, bis sie nahezu Null ist. Die Schabevorrichtung 21 wird gestartet. Zum Zeitpunkt 71 des Startens der Schabevorrichtung 21 nimmt die Geschwindigkeit des Kolbens wieder zu. Dies ist darauf zurückzuführen, dass Feststoff aus der Kammer 13 ausgetragen wird. Die Zunahme der Geschwindigkeit lässt sich durch einen Peak 73 erkennen. Der Kolben bewegt sich weiter, bis er erneut den oberen Totpunkt 61 erreicht hat. Sobald der Kolben den oberen Totpunkt 61 erreicht hat bleibt erneut stehen und die Geschwindigkeit ist Null.

Um den Betrieb der Schabevorrichtung 21 nicht zu starten, während der Kolben beginnt nach oben zu fahren und zu diesem Zeitpunkt den Schwellwert überschreitet, ist es bevorzugt, wenn als weitere Größe auch die Beschleunigung des Kolbens berücksichtigt wird. Zum Beginn des Komprimierungsvorgangs ist der Wert der Beschleunigung positiv, während er zum Ende des Komprimiervorganges, wenn die Geschwindigkeit wieder gegen Null geht negativ ist, da der Kolben langsamer wird. Auf diese Weise lässt sich exakt der Zeitpunkt ermitteln, zu dem die Schabevorrichtung 21 gestartet werden soll, um den Feststoff aus der Kammer 13 in den Feststoffsammelraum 29 abzuschaben.

Bezugszeichenliste

| 1 | Apparat |
|---|---|
| 2 | Behälter |
| 3 | Kolben |
| 5 | Siebplatte |
| 7 | Kanal |
| 9 | Zufuhrleitung |
| 11 | Einlassventil |
| 13 | Kammer |
| 15 | Kolbenstange |
| 17 | Sammelraum |
| 19 | Feststoffschicht |
| 21 | Schabevorrichtung |
| 23 | Schabergrundkörper |
| 25 | Schabermesser |
| 27 | Spalt |
| 29 | Feststoffsammelraum |
| 31 | Welle |
| 33 | Antrieb |
| 35 | Spülmittelzuleitung |
| 37 | zweites Einlassventil |
| 39 | Spülmittelauslass |
| 41 | Auslassventil |
| 42 | Auslass |
| 45 | zweites Auslassventil |
| 47 | Wegaufnehmer |
| 49 | Zeitfunktion |
| 51 | Steuereinrichtung |
| 53 | x-Achse |
| 55 | y-Achse |
| 57 | Funktion des Kolbenweges |

59 Funktion der Geschwindigkeit
61 oberer Totpunkt
63 unterer Totpunkt
65 Ausschlag nach unten
67 maximale Geschwindigkeit
69 oberes Maximum
71 Starten der Schabevorrichtung
73 Peak

**Patentansprüche**

1. Verfahren zur Steuerung einer Trennung eines Gemisches aus mindestens zwei Substanzen , wobei mindestens eine Substanz als Feststoff und mindestens eine Substanz als Flüssigkeit vorliegt und wobei sich während des Trennprozesses die Viskosität des Gemisches durch die Abtrennung mindestens einer Substanz ändert, **gekennzeichnet durch** die folgenden Schritte:

    (a) Bewegen eines Kolbens (3) in einem Apparat (1) in dem Gemisch unter Beaufschlagung mit einer konstanten Kraft,
    (b) Erfassen der Geschwindigkeit und/oder der Beschleunigung des Kolbens (3),
    (c) Vergleich der Geschwindigkeit und/oder der Beschleunigung mit vorgegebenen Sollwerten und
    (d) Abkratzen des Feststoffs, der ausgefallen ist und sich abgesetzt hat, bei Erreichen der Sollwerte für die Geschwindigkeit und/oder die Beschleunigung, mit einer im Apparat (1) enthaltenen Schabevorrichtung (21).

2. Verfahren gemäß Anspruch 1, **dadurch gekennzeichnet, dass** die Geschwindigkeit durch Bilden der ersten Ableitung des Weges des Kolbens (3) nach der Zeit und die Beschleunigung durch Bilden der zweiten Ableitung des Weges des Kolbens (3) nach der Zeit bestimmt werden.

3. Verfahren gemäß Anspruch 1 oder 2, **dadurch gekennzeichnet**, der Apparat (1) einen Behälter (2) umfasst, in dem ein Kolben (3) axial zur Gehäuseachse bewegbar aufgenommen ist, wobei der Kolben (3) mit einer als Filterfläche dienenden Siebplatte (5) abgedeckt ist, und im Kolben (3) mindestens ein Kanal (7) ausgebildet ist.

4. Verfahren gemäß einem der Ansprüche 1 bis 3, **dadurch gekennzeichnet, dass** als Schabevorrichtung (21) ein Schabergrundkörper (23) eingesetzt wird, in dessen, dem Kolben (3) zugewandten Stirnseite, Schabermesser (25) eingelassen sind, wobei die Schabermesser (25) jeweils einen durch den Schabergrundkörper (23) durchgängigen Spalt (27) freilassen, wobei der Spalt (27) eine Verbindung von einer Kammer (13) mit einem Feststoffsammelraum (29) herstellt.

5. Verfahren gemäß Anspruch 4, **dadurch gekennzeichnet, dass** der Feststoff aus dem Feststoffsammelraum (29), vorzugsweise mit geschmolzenen Feststoffmaterial, ausgespült wird.

6. Verfahren gemäß einem der Ansprüche 1 bis 5, **dadurch gekennzeichnet, dass** bei Erreichen der Sollwerte für die Geschwindigkeit und/oder die Beschleunigung der Trennprozess beendet wird.

7. Verfahren gemäß Anspruch 6, **dadurch gekennzeichnet, dass** der Trennprozess durch Beenden der Bewegung des Kolbens (3) beendet wird.

8. Verfahren gemäß einem der Ansprüche 1 bis 7, **dadurch gekennzeichnet, dass** der Kolben (3) durch einen Linearantrieb oder einen Luftdruckzylinder oder einen Hydraulikzylinder angetrieben wird.

9. Verfahren gemäß einem der Ansprüche 1 bis 8, **dadurch gekennzeichnet, dass** während des Abkratzens des abgesetzten Feststoffes mit der Schabevorrichtung (21) der Kolben (3) weiter bewegt wird.

10. Verfahren gemäß einem der Ansprüche 1 bis 9, **dadurch gekennzeichnet, dass** der Feststoff in dem zu trennenden Gemisch durch eine Kristallisation erzeugt wird.

11. Verfahren gemäß Anspruch 10, **dadurch gekennzeichnet, dass** die Kristallisation und die Abtrennung des Feststoffes aus dem Gemisch im gleichen Apparat (1) durchgeführt werden.

12. Verfahren gemäß Anspruch 10, **dadurch gekennzeichnet, dass** die Kristallisation in einem weiteren Apparat durchgeführt wird, so dass dem Apparat (1), in dem die Trennung des Gemisches durchgeführt wird, eine Suspension aus einer Flüssigkeit mit darin enthaltenen Kristallen zugeführt wird.

13. Verfahren gemäß einem der Ansprüche 10 bis 12, **dadurch gekennzeichnet, dass** die Kristalle p-Dichlorbenzen-Kristalle sind, die aus einer Lösung, die m-Dichlorbenzen, o-Dichlorbenzen und p-Dichlorbenzen enthält, auskristallisiert werden.

**Claims**

1. Method for controlling separation of a mixture of at least two substances, at least one substance being present as a solid and at least one substance being present as a liquid and the viscosity of the mixture changing during the separation process due to the isolation of at least one substance, **characterized by** the following steps:

> (a) moving a piston (3) in an apparatus (1) in the mixture while subjecting it to a constant force,
> (b) detecting the velocity and/or acceleration of the piston (3),
> (c) comparing the velocity and/or acceleration with predetermined desired values and
> (d) scraping off the solids which have precipitated and been deposited, when the desired values for velocity and/or acceleration are reached, with a scraper device (21) present in the apparatus (1).

**2.** Method according to Claim 1, **characterized in that** velocity is determined by forming the first time derivative of the travel of the piston (3) and acceleration is determined by forming the second time derivative of the travel of the piston (3).

**3.** Method according to Claim 1 or 2, **characterized in that** the apparatus (1) comprises a container (2) in which a piston (3) is accommodated so as to be movable axially to the housing axis, the piston (3) being covered by a sieve plate (5) acting as a filter surface and at least one channel (7) being formed in the piston (3).

**4.** Method according to one of Claims 1 to 3, **characterized in that** the scraper device (21) used is a scraper base body (23), into the piston (3)-facing end side of which, scraper knives (25) are inset, the scraper knives (25) each leaving clear a gap (27) passing through the scraper base body (23), the gap (27) producing a connection from a chamber (13) to a solids collecting space (29).

**5.** Method according to Claim 4, **characterized in that** the solids are flushed out of the solids collecting space (29), preferably by molten solids material.

**6.** Method according to one of Claims 1 to 5, **characterized in that** the separation process is terminated when the desired values for velocity and/or acceleration are reached.

**7.** Method according to Claim 6, **characterized in that** the separation process is terminated by termination of the movement of the piston (3).

**8.** Method according to one of Claims 1 to 7, **characterized in that** the piston (3) is driven by a linear drive or a pneumatic cylinder or a hydraulic cylinder.

**9.** Method according to one of Claims 1 to 8, **characterized in that**, during scraping off of the deposited solids with the scraper device (21), the piston (3) is moved further.

**10.** Method according to one of Claims 1 to 9, **characterized in that** the solids are produced by crystallization in the mixture to be separated.

**11.** Method according to Claim 10, **characterized in that** crystallization and isolation of the solids from the mixture are carried out in the same apparatus (1).

**12.** Method according to Claim 10, **characterized in that** crystallization is performed in a further apparatus, such that a suspension consisting of a liquid with crystals contained therein is supplied to the apparatus (1) in which separation of the mixture is carried out.

**13.** Method according to one of Claims 10 to 12, **characterized in that** the crystals are p-dichlorobenzene crystals, which are crystallized out of a solution which contains m-dichlorobenzene, o-dichlorobenzene and p-dichlorobenzene.

## Revendications

**1.** Procédé pour commander la séparation d'un mélange composé d'au moins deux substances, dans lequel au moins une substance se trouve sous forme solide et au moins une substance se trouve sous forme liquide, et dans lequel la viscosité du mélange varie pendant le processus de séparation du fait de la séparation d'au moins une substance, **caractérisé par** les étapes suivantes:

> (a) déplacer un piston (3) dans un appareil (1) dans le mélange en lui appliquant une force constante,
> (b) détecter la vitesse et/ou l'accélération du piston (3),
> (c) comparer la vitesse et/ou l'accélération à des valeurs de consigne prédéterminées, et
> (d) racler la substance solide, qui a précipité et qui s'est déposée, lorsque les valeurs de consigne de la vitesse et/ou de l'accélération sont atteintes, avec un dispositif de raclage (21) contenu dans l'appareil (1).

**2.** Procédé selon la revendication 1, **caractérisé en ce que** l'on détermine la vitesse en formant la dérivée première du trajet du piston (3) par rapport au temps et l'accélération en formant la dérivée seconde du trajet du piston (3) par rapport au temps.

**3.** Procédé selon la revendication 1 ou 2, **caractérisé en ce que** l'appareil (1) comprend un récipient (2), dans lequel un piston (3) est logé de façon mobile axialement par rapport à l'axe de l'enceinte, dans lequel le piston (3) est recouvert d'une plaque de tamis (5) faisant office de face de filtrage, et au moins un canal (7) est formé dans le piston (3).

4. Procédé selon l'une quelconque des revendications 1 à 3, **caractérisé en ce que** l'on utilise comme dispositif de raclage (21) un corps de base de racloir (23), dont la face frontale tournée vers le piston (3) est garnie de lames de raclage (25), dans lequel les lames de raclage (25) laissent libre respectivement une fente continue (27) à travers le corps de base de racloir (23), dans lequel la fente (27) établit une liaison d'une chambre (13) avec un espace de collecte de substance solide (29).

5. Procédé selon la revendication 4, **caractérisé en ce que** la substance solide est chassée hors de l'espace de collecte de substance solide (29), de préférence avec de la matière de la substance solide fondue.

6. Procédé selon l'une quelconque des revendications 1 à 5, **caractérisé en ce que** l'on termine le processus de séparation lorsque les valeurs de consigne de la vitesse et/ou de l'accélération sont atteintes.

7. Procédé selon la revendication 6, **caractérisé en ce que** l'on termine le processus de séparation en arrêtant le déplacement du piston (3)

8. Procédé selon l'une quelconque des revendications 1 à 7, **caractérisé en ce que** le piston (3) est entraîné par un entraînement linéaire ou par un cylindre à air comprimé ou par un cylindre hydraulique.

9. Procédé selon l'une quelconque des revendications 1 à 8, **caractérisé en ce que** l'on continue à déplacer le piston (3) pendant le raclage de la substance solide déposée avec le dispositif de raclage (21).

10. Procédé selon l'une quelconque des revendications 1 à 9, **caractérisé en ce que** l'on produit la substance solide dans le mélange à séparer par une cristallisation.

11. Procédé selon la revendication 10, **caractérisé en ce que** l'on effectue la cristallisation et la séparation de la substance solide hors du mélange dans le même appareil (1).

12. Procédé selon la revendication 10, **caractérisé en ce que** l'on effectue la cristallisation dans un autre appareil, de telle manière que l'on envoie dans l'appareil (1), dans lequel on effectue la séparation du mélange, une suspension composée d'un liquide avec des cristaux contenus dans celui-ci.

13. Procédé selon l'une quelconque des revendications 10 à 12, **caractérisé en ce que** les cristaux sont des cristaux de p-dichlorobenzène, qui sont cristallisés hors d'une solution qui contient du m-dichlorobenzène, du o-dichlorobenzène et du p-dichlorobenzène.

$$\nu = \frac{ds}{dt}$$

$$a = \frac{d^2s}{dt^2} = \frac{d\nu}{dt}$$

s(t)

**Fig. 1**

**Fig. 2**

EP 2 188 029 B1

**IN DER BESCHREIBUNG AUFGEFÜHRTE DOKUMENTE**

**In der Beschreibung aufgeführte Patentdokumente**

- EP 0920894 B
- US 20070023949 A1

- EP 0920894 A